# EUROPEAN PATENT APPLICATION

(11) **EP 4 632 702 A1**
(43) Date of publication of application: **15.10.2025**
(21) Application number: 24170025.1
(22) Date of filing: 12.04.2024
(51) Int. Cl.: G07C 13/00, H04L 9/32, H04L 9/00, H04L 9/40

(54) **ELECTRONIC VOTING PLATFORM AND METHOD THEREOF**

(30) Priority: 09.04.2024 IT 202400007879
(71) Applicant: Net Service SpA, 40122 Bologna (BO) (IT)
(72) Inventor: MARCHESI, Lodovica, 09012 Capoterra (CA) (IT); DI FRANCESCO, Marco, 09134 CAGLIARI (IT); FOLEGANI, Enrico, 40129 BOLOGNA (IT)
(74) Representative: Conversano, Gabriele

(57) **Abstract**

The present invention concerns the topic of electronic voting; that is, a voting method in which each voter can express his vote, even remotely, via an IT platform. This is a topic in which the interest is due to the fact that many electoral consultations represent quite complex events, because they mobilize a large number of people and must offer very high standards of security; consequently, they are significantly costly events.

Electronic voting represents a way to reduce the costs of electoral consultations, to make them more efficient, and therefore also an instrument that can potentially be used more frequently. Moreover, an electoral consultation can be seen as a particular case of information management (a rather complex case, moreover) which, as such, should represent an almost natural, albeit challenging, field of application for information technologies.

The proposed solution involves using at least a pair of servers configured to manage the voters and their votes separately, so as to allow, through an *"Anonymous Kerberos"* type approach, both the certain and reliable identification of the voters and the the anonymity of their vote: the latter is an essential guarantee to protect the freedom of voting.

The voting platform indicated in the invention is configured to support a series of IT services combined in an original and complex way. In particular, the main state-of-the-art information technologies used by the invention concern encryption services as well as services based on *"Blockchain"* transactions.

In a nutshell, the proposed voting platform provides that every step in which something must not be seen, this something is processed in an appropriately encrypted way, and in every circumstance in which something must not be manipulated, this something is stored in a *"Blockchain".*

## Description

### Technical Field of the Inventio

In general, the field of application of the present invention concerns the topic of electronic voting.

The interest in technologies that can support electronic voting methods is due to the fact that many electoral consultations represent quite complex events, because they involve a large number of people and must offer very high security standards; consequently, they are significantly expansive events.

An apparently promising way to reduce the costs of electoral consultations, to make them more efficient, and, therefore, also an instrument that can potentially be used more frequently, consists in the opportunity to resort to so-called electronic voting; that is, a voting method in which each voter can cast his or her vote via an IT platform.

### Prior Art

Electoral consultations in general, but especially in cases where they decree decisions of great importance, can be subject to attempts at fraud: consequently, it is essential that the platforms and methods adopted to organize the voting procedures offer significant guarantees to protect correctness of votes.

Although there are numerous ways to organize electoral events, nowadays, the most important electoral consultations (for example, political elections) are normally conducted using non-electronic methods; essentially because electronic methods are not yet considered sufficiently safe.

Traditional methods involve calling voters to a certain number of physical polling stations, to have them cast a vote on a paper ballot. Today, these methods are considered the safest, and are widely used even if they are very expensive and slow methods; their safety is essentially due to the fact that they involve the mobilization of many people committed to guaranteeing the correctness of voting operations and the safety of polling stations.

The inefficiency of traditional electoral consultations is evident, however, the fact that it continues to be essentially the only way in which the most important elections are managed is a proof that other methods, potentially more efficient, are not yet suitable for offering sufficient guarantees.

Traditional electoral consultations, despite the fact that they can never offer absolute guarantees of correctness, are theoretically designed to guarantee the following prerogatives:
✔ control of access to voting only to those entitled to vote,
✔ anonymity of the vote (prerogative which is associated with freedom of voting),
✔ control of the regularity of the ballots.

The main alternatives to the so-called traditional consultations are voting by post and electronic voting (for which some solutions have already been proposed).

With reference to voting by post, although it is used in many circumstances (often as a complementary method to the traditional method), it presents numerous contraindications, to the point that, when it is adopted, it ends up regularly giving rise to protests and controversies.

In particular:
✔ there is no guarantee that the voted ballot will arrive and that it will be correctly counted;
✔ it is possible to send spurious ballots, a phenomenon that cannot in any way be verified, being able to count on a physiological percentage of abstentions;
✔ it allows the alteration, without the possibility of checks, from a blank ballot to a voted ballot, and from a voted ballot to a non-valid ballot;
✔ it does not allow any form of control of one's vote.

With reference to current electronic voting platforms, however, the main limitations and main contraindications are the following:
✔ these are systems that do not provide an open code, and in any case do not guarantee that the code is not altered during or after installation;
✔ they do not guarantee that the data is not altered by unfaithful system administrators;
✔ they do not allow any form of verification of the correct counting of one's vote.

In any case, full electronic voting, meaning a vote carried out on an IT platform accessible from a private terminal of the voter, who does not need to go to a polling station, is, to date, very little widespread.

Some applications of partially electronic voting (which differs from full electronic voting), in which electronic polling stations are used, are more widespread. In the case of partially electronic voting, the voter goes to a physical polling station, where he is recognized, where the fact that he has voted is recorded, and enters the polling station only to vote. In this case, the use of the IT platform essentially serves to speed up the counting operations.

The contraindication consists in the fact that the guarantees on the regularity of the counting, and on the fact that the votes cast are not manipulated, are totally entrusted to the integrity of a software, and it is not possible to allow interested third parties to carry out checks.

In this context, we will not dwell further on the analysis of existing solutions, as their diffusion is not significant at the moment. In particular, platforms to allow voters to cast their vote without going to a polling station are not significantly widespread.

Technologies potentially suitable for organizing forms of full-electronic voting exist, but they are used more frequently for carrying out smaller electoral consultations or polls; while, where the electoral consultation produces important and contestable effects, full-electronic voting procedures are almost never used.

In essence, the main voting method in which a voter is allowed to cast his vote without going to the polling station is postal voting; which, however, has very strong contraindications, so much so that it is surprising how it is practiced for political elections in some states.

The fact that remote electronic voting is not widespread, despite the very strong advantages it could offer in terms of efficiency and costs of electoral processes, is a proof that satisfactory procedures are not actually available.

A fairly recent, but now well-established, information technology that could be exploited in electronic voting applications is the so-called "Blockchain" technology.

Following this description, some characteristics of the "Blockchain" technology are briefly outlined, in a very concise way; these technologies constitute the state of the art, in terms of enabling technologies, on which to base the present invention.

The so-called "Blockchain" technology represents a fairly complex topic (just the complexity of the algorithms underlying its implementation), but which, from an application point of view, can be summarized in a simple way, defining what kind of services it supports and what the distinctive characteristics of these services are.

For exhaustive insights into the "Blockchain" technology (literally "chain of blocks"), please refer to the vast literature on the subject.

In a nutshell, a "Blockchain" is a distributed system in which various nodes participate. It has three types of access: reading, writing (sending valid transactions) and consensus (defining the blocks to add to the "Blockchain"); there is no access for deleting or removing a block: if it were necessary to delete some content previously inserted in a "Blockchain", this action is replaced with the writing of a new block, containing information corresponding to the cancellation of other information previously entered (but the latter would still physically remain in the "Blockchain").

Depending on the access permissions granted to the various users, different types of "Blockchain" can be defined.

In a "*Public Blockchain*"*,* anyone can perform all three types of access.

In a "*Permissioned Blockchain*", the nodes belong to one or more organizations, which manage the consensus operations (i.e., the third type of access); and new consensus participants can be accepted with the "permission" of those who own the "Blockchain".

In a "*Public Access Blockchain*", reading and writing operations are allowed to everyone. In the case in which a "*Public Access Blockchain*" is also a "*Public Blockchain*" this is true by construction, while in the "*Permissioned Blockchain*", it is the owners of the "Blockchain" who grants everyone such access to the nodes of the "Blockchain".

In both cases, the writing of the "Blockchain" may still be subject to conditions, such as, for example, the payment of a commission or the membership of a list of persons authorized to carry out specific operations.

As a result of the consensus mechanisms, which regulate writing operations, a "Blockchain" can therefore be seen as a distributed computer archive that allows any authorized person to archive its own content; the main prerogative of this archiving is that of being irreversible and unchangeable. The distinctive thing, compared to other means of archiving, is given by the fact that irreversibility and immutability are guaranteed by the technology itself and not by an external subject who holds the function of guarantor: in fact, the guarantees offered by a "Blockchain " at the state of the art are substantially incorruptible; and this prerogative is made possible by an original use of cryptographic techniques for encryption, data decryption, public and private key algorithms and digital signature "hash" functions. These techniques are known but, used together, allow absolute security of the integrity of the "Blockchain" data.

Without going into the details of the various known "Blockchain" implementations, it is noted that there can evidently be an indeterminate number of "Blockchains", each characterized by its own programs (i.e., algorithms) which are used to implement the actions of loading a content and its validation.

The loading is carried out by the subject who owns the content, while the validation is carried out by a community of other subjects, i.e., the subjects who are responsible for producing the so-called "consent", who, in general, are not coordinated with each other and who, through their consent action, make the upload technically irreversible and unchangeable.

Each "Blockchain" is therefore made up of a set of algorithms and a community of users. These algorithms are implemented in programs executed on the machines of those who maintain the "Blockchain", i.e., the community of users which, in a classic public "Blockchain" context, is a community that forms spontaneously without being coordinated: the users, in fact, are those who keep the "Blockchain" alive by means of their consensus actions.

Therefore, t can be understood how a "Blockchain", realistically, is subject to a single major risk, namely the risk of being abandoned by users; however, the larger the community of its users, the more the risk is reduced, until it becomes essentially zero risk, when a "Blockchain" becomes very large and popular.

It is due to the criticality of keeping "Blockchains" alive that some of these, called "Permissioned Blockchains", are based on a non-spontaneous community of users, with new users who can only be added with the permission of existing ones.

In this case their maintenance can be guaranteed, but the characteristic which consists in being intrinsically trustable is lost (or at least reduced): in this case, in fact, the community of users can be coordinated, and therefore potentially corruptible. Even in this case, however, the greater the number of independent users who participate, the lower the risk of collusion and corruption. Furthermore, it is possible to periodically "anchor" the last validated block of information in the "Permissioned Blockchain" within a "Public Blockchain". This makes the "Permissioned Blockchain" as unalterable as the public one to which it is anchored.

In any case, some "Public Blockchains" exist, they are widespread, stable and reliable; these "Blockchains" offer storage performance that can be assumed to be truly irreversible and immutable.

An important example of a "Blockchain" of this type is the "Blockchain" known as "*Ethereum*"*,* on which some particular contents are defined. In fact, although theoretically a user can upload any type of file to a "Blockchain", it is also true that some types of content are those for which the "Blockchain" itself was designed, and therefore it will be more efficient in processing such data. In summary, "Blockchains" are a form of well-known archive that guarantees the security and immutability of all data stored in this archive; it is therefore clear that this is a technology that can be used to create secure ballot boxes where important data can be stored such as, for example, the votes cast by voters during an electoral consultation.

However, although "Blockchain" technology can satisfy some of the requirements required to implement a platform to support an electronic voting application, "Blockchains", as such, cannot represent the direct solution to all the problems posed by such application which, as explained above, has numerous requirements.

It is therefore necessary to articulate a process which, making good use of the security properties of "Blockchains", allows the construction of mechanisms capable of offering all the guarantees required to support an important electoral consultation, in which any attempt at fraud must be countered.

### Purpose and Summary of the Invention

The general purpose of the present invention is to provide an electronic voting IT platform which allows supporting an electoral consultation without the need for the voter to go to a polling station, and which offers at least a level of reliability equivalent to that which can be ensured by resorting to an electoral consultation conducted with a traditional method, i.e., with physical ballots, filled out in a polling station, and with a count conducted by real persons who can be supervised by parties while carrying out the counts.

In particular, said electronic voting IT platform must offer a series of services that allow it to support the voting operations of an electoral consultation in which:
✔ voters are identified, and a check is carried out that they have the right to vote;
✔ all voters who participate in the vote are registered, ensuring that no voter can vote more than once, and obviously that only those who are entitled to vote can vote;
✔ the votes cast are structurally anonymous (only the voter must be able to know the content of his vote);
✔ once the vote has been cast by a voter, it is impossible to modify it (i.e., falsify it) by a person other than the voter who cast it;
✔ the counting of the votes cast is completely automatic, but can also be verified at a later time;

In essence, the electronic voting IT platform according to the invention must offer the same security guarantees that are offered by traditional voting systems, but they are much more convenient for the voter and, above all, much more efficient, given that they do not require the massive mobilizations of personnel, means and physical spaces, which are necessary to organize traditional electoral consultations.

The objectives set for this invention are achieved through the use of an electronic voting computer platform comprising:
- a first voters' management server;
- a second voting management server;
- a platform in "Blockchain" technology,
being said first voters' management server (110) administered by a first system administrator, and configured to:
a. support the remote access of a generic voter from his private terminal,
b. redirect said generic voter towards an identification service with strong authentication,
c. produce a first authentication "token" (T1), the production of said first authentication "token" (T1) being dependent on the outcome of the interaction of said generic voter with said first voters' management server.

Furthermore, said first voters' management server is characterized by the fact of being configured to:
d. acquire from said generic voter a public encryption key generated by said generic voter which locally stores the corresponding private key,
e. acquire from said generic voter the "address" on said platform in "Blockchain" technology to be used to memorize said first authentication "token" (T1),
f. notify said generic voter of the assignment of said first authentication "token" (T1) via said platform in "Blockchain" technology by inserting said first authentication "token" (T1), encoded with the voter's public encryption key, into a first "Smart Contract" (SC1) stored on said "Blockchain" using the previously communicated "address", thus limiting the transactions concerning said first "Token" (T1) to those coming from said "address" previously communicated.

Furthermore, said second voting management server is administered by a second system administrator, independent of said first system administrator who administers said first voters' management server and is configured to:
g. support the remote access of a generic voter from his private terminal,
h. acquire from said generic voter a public encryption key, different from that indicated in the previous point "d.", generated by said generic voter, who locally stores the corresponding private key,
i. acquire from said generic voter said first authentication "token" (T1) in encrypted form, and execute appropriate programs aimed at verifying the authenticity of said first authentication "token" (T1).

Furthermore, said second voting management server is characterized by the fact of being configured to:
j. generate a second voting "token" (T2), which contains a public encryption key to be sent to said generic voter by storing the corresponding private encryption key, in the form of a string, in a keys' vector, containing the other private keys, generated for the other voters, said vector of strings being ordered in a random order,
k. support the formulation of an electoral choice by said generic voter,
I. code said electoral choice by generating a ballot paper consisting of a string of characters,
m. execute the encryption of said string of characters, generating a voting string, suitable to be kept pending scrutiny,
n. insert said voting string, in random order, in a vector of strings in which a plurality of other strings corresponding to the votes expressed by the other voters are collected in random order, said vector of strings being in turn inserted into a specific second "Smart Contract" (SC2) associated with the vote in progress.

Moreover, said electronic voting computer platform provides that, at the level of the voting management server, they are executed programs configured to carry out the counting of the votes cast, after all the votes cast in the time interval reserved for voting have been stored as indicated in the previous point "n."; and to implement said counting, said voting management server is configured to execute a program, in turn configured to try to decrypt each voting string, using each private key stored in the key vector indicated in the previous point "j."

The reading of the voting strings occurs by implementing a sequence of decoding attempts until the program finds the right key: that is the one that returns a string in the correct format for voting and not a disordered sequence of bits.

The main advantage of the present invention consists in the fact that its teachings allow the implementation of a real method for performing an electoral consultation that satisfies all the main requirements for which the invention itself was developed.

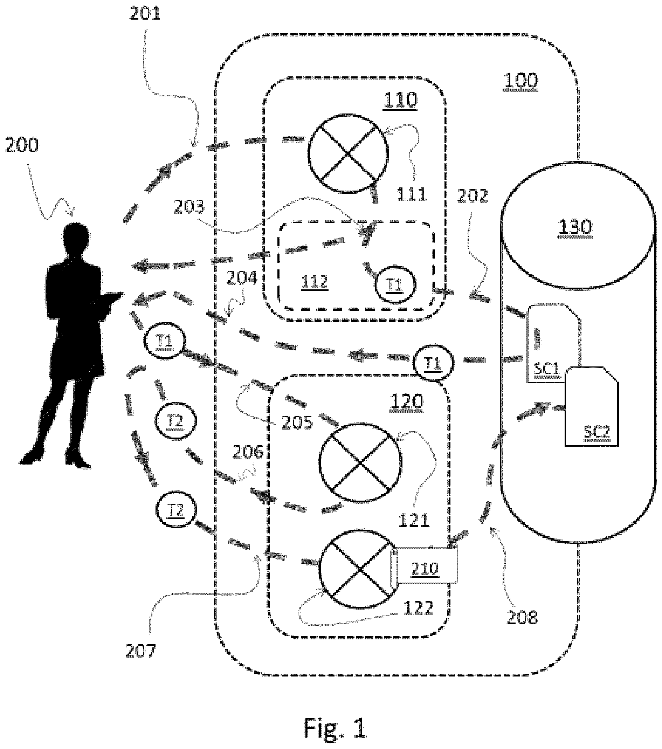

This invention also presents further advantages, which will be more evident from the following description, which illustrates further details of the invention itself through some forms of implementation, from the attached claims, which form an integral part of the present description, and from the attached Figure 1, in which a high-level architecture representing the operation of the electronic voting platform according to the invention is shown in a schematic and simplified way.

The objectives of the invention are achieved by activating processes that can also be different from each other; in fact, each electoral consultation must be able to be defined with its own rules, and each election is potentially different from the others. However, some characteristics of the electronic voting platform according to the invention are essential to offer the security guarantees required for any different electoral consultation.

### Detailed Description

The invention is based on a complex and unprecedented use of a set of enabling technologies. These are known technologies, if taken individually, but whose application potential is still partly unexplored.

In particular, strong identification technologies, encryption technologies, as well as "Blockchain" technology are massively exploited (the main properties of which have been previously recalled, which allow the present invention to be conceived).

The problem of offering all the trustiness guarantees that constitute the objective of the invention has been broken down into elementary sub-problems.

The first sub-problem that was addressed and resolved was to simultaneously guarantee identification of the voter and anonymity of the vote he expressed.

As in the case of a traditional electoral consultation, in fact, also in the case of an electronic vote, the voter must be recognized with certainty (therefore his identity must be known, at least in some phase of the process), but he must be given the tools allow him to cast his vote anonymously. These methodological steps can be guaranteed in an IT environment by applying a methodology known as "*Anonymous Kerberos*", which foresees to operate on two distinct and independent servers, managed by two mutually independent and non-colluding system administrators.:
- a first voters' management server, and
- a second voting management server.

Said first voters' management server, from a physical point of view, is a classic server accessible from the Web that, as happen with all "Web-applications", can be implemented in various ways and can also run on the cloud. It can obviously be a distributed platform, and is accessible via the internet by every voter, who can connect to it remotely via his own terminal suitable for accessing the internet.

Said first voters' management server contains the list of voters entitled to vote, as well as a list of nominations; possibly, it can also publish the voting rules, and the results after the counting (even if the latter publications can theoretically take place elsewhere).

For example, said first voters' management server could be a server administered by a specific office of the Ministry of the Interior, by a regional or municipal authority, or by an office of a political party (for the execution of primary elections), etc...

Said first voters' management server is also configured to offer, directly or delegated, an identification service with strong voter authentication.

With reference to this identification service, the prior art offers numerous widely consolidated techniques, which are tools normally used by the majority of citizens to access IT services where secure identification is required.

The "*Anonymous Kerberos*" approach consists of carrying out the following steps:
✔ the voter who wants to vote connects to said first voter management server by identifying himself in a strong way;
✔ said first voters' management server checks the voter authorization, and that the voter has not already obtained his authentication certificate (in the form of a "token");
✔ if this check confirms that the voter has not yet obtained his authentication certificate, it redirects the voter to an authentication service;
✔ the procedure then produces an authentication certificate in the form of an anonymous "token" suitable for being kept in a "Blockchain" technology platform.

This operation corresponds to the recognition of the voter, who is allowed to vote without him having to declare his identity anymore, he just needs to show his authentication certificate. By the sole fact that he possesses such an authentication certificate, all the platforms that the voter will use, in the subsequent stages of the voting process, are guaranteed that the voter can produce proof that he is entitled to vote and that he does not have already voted.

The only place where it is possible to associate an authentication certificate with the person who owns it is said first voters' management server: however, the voter, when operating on other servers to cast his vote, must take care to deposit his own authentication certificate always in encrypted form (with encryption keys that the voter must generate outside of said first voters' management server), so that it will always be impossible to associate the vote expressed by a voter with his or her identity (in theory only the voter himself may be able to do so).

All the individual access and encryption operations that the voter is asked to carry out will always be guided by the specific software responsible for supervising the voting operations, so as to make the technical steps sufficiently transparent to the eye of the inexperienced voter.

Said authentication certificate, in the actual implementation form of the invention, has the form of a *"token"* suitable for being inserted into a "*Smart Contract*" of a *"Blockchain",* said *"token"* is encrypted for the first time with the private key of the voters' management server, and must contain at least the following information:
✔ an identifier of the electoral consultation,
✔ a random string, long enough to be unique.

At this point the voter generates, and holds, a private key, the corresponding public key and the *"address"* on the *"Blockchain"* which must be used by the voter to exchange his authentication certificate, according to the specific algorithm of the *"Blockchain"* used (e.g., *Ethereum*). Downstream of the authentication service (conceptually operated at the voters' management server level), the voter is asked for his public key and *"address"* on the *"Blockchain";* uses said public key to encode his authentication certificate (hereinafter simply the authentication "*token*") and then stores it in a first "*Smart Contract*" (hereinafter SC1), so that only a transaction coming from the communicated *"address"* can read the encoded *"token".*

The voter reads and decodes his authentication *"token"* through a transaction towards the *"Blockchain"* coming from his *"address",* the only one who can read it.

Also said second voting management server, as in the case of the first voters' management server, from a physical point of view, it looks like a classic Web server, and is accessible remotely via the Internet by each voter, who can connect to it via his personal terminal.

As already mentioned, said second voting management server must be administered by a person independent of the administrator of the first voters' management server, it is capable of verifying the authentication *"token"* and producing a corresponding voting *"token"* for every voter.

The voter connects to said second voting management server anonymously; possibly, he can use a VPN to hide the IP address he is using.

As previously mentioned, the voter, once he has received his own authentication certificate, can (and must) always operate anonymously, relying only on his own authentication certificate. In fact, the voter, having logged in to the second voting management server, sends it a new public encryption key, generated for the occasion and different from the one previously provided to the authentication service, and his own authentication *"token"* by encrypting it with the public key of the voting management server.

Said second voting management server decodes the authentication *"token"* just received using its private key and verifies that a voter has not already sent the same authentication *"token",* thus blocking this further type of attempt to carry out a double vote (an attempt which does not have a correspondent in traditional voting, because the identification immediately precedes the vote, thus resulting substantially contextual).

Once it has been verified that the *"token"* has not already been sent, its authenticity is then also verified, decoding it with the public key of the voter management server, and checking that the result is a string that begins with the identifier of the electoral consultation.

Said second voting management server generates a random number, different for each voter, which is also the voting *"token";* this random number (i.e., said voting "*token*") is a new public encryption key for which the corresponding private key is also generated.

Said private encryption key (which corresponds to the key contained in the voting "*token*") is kept in a special list, while the voting *"token"* (i.e., the corresponding public encryption key) is sent to the voter by encoding it with the voter's key that he had previously generated and sent. In this way no one, except the voter himself, can associate the voting *"token"* with himself.

At this point, the voter has everything he needs to cast his vote, he is ready to cast his vote and to store it where he can have sufficient security guarantees; so as to simulate the insertion of a voted ballot paper into a ballot box, where it will mix with the other votes without it being possible to trace the voter who voted for it.

In fact, having received and decoded the voting *"token"* with his private key, the voter exercises his electoral choice (for example he chooses the candidate he wants to vote for), using a format specifically provided by the voting management server.

The vote produced, from an IT point of view, is a string of characters that reports the choices made by the voter according to a specifically defined coding, which can vary depending on the specific electoral consultation.

The voter encodes this voting string using the voting *"token",* subsequently the ballot form is further encoded with the public key of the voting management server, and finally it is sent to a specific service of the voting management server, which decodes the ballot form with its private key and inserts it, in random order, into a vector of strings (a phase that could correspond to the insertion of the ballot paper into the ballot box) in which a plurality of other strings are collected in random order corresponding to the coded votes cast by other voters. The sending of the ballot form is accepted only within the time limits set for voting, the voter has finished, and he can disconnect from the voting management server.

Possibly, the system can provide for the generation of a notification that acts as an acknowledge for the voter who has completed the voting operations.

At this point a further sub-problem arises, which consists in offering adequate guarantees that the cast votes are not manipulated. In fact, this problem often represents the main cause of distrust in the use of IT procedures to manage an important electoral consultation.

Rightly, the voter has every reason to expect to be able to check that the votes are not manipulated. In traditional procedures, in fact, there are many people who monitor the ballot boxes and ballots until the counting is completed; and even afterwards, in case of well-founded suspicions, it is always possible to re-examine the voted ballots, which are kept with specific procedures, suitable to offer good guarantees against fraud and various manipulations. All these surveillances produce an effect of trust, which the voter perceives as an adequate guarantee for the case.

The guarantee that the cards are not manipulated, in a computer environment, is offered through the fundamental property of *"Blockchain"* storage: in fact, all the received ballot forms, stored in random order, are collected in a vector and inserted into a specific *"Smart Contract'* (hereinafter SC2) associated with the vote in progress.

The fact that the votes are stored in a *"Blockchain"* is an adequate guarantee that these votes are stored in an environment where manipulations are not possible.

It is clear that, more than other pieces of code, the code that specifically executes this step of the vote insertion procedure in the *"Blockchain"* must be open, public and verifiable software. Since it is the code of a *"Smart Contract'* it is by definition visible and immutable; the system must also provide the source code, which can easily be verified to correspond to the *"bytecode"* present in the *"Blockchain".* However, it is a short code and certainly easily readable by an expert in the sector.

The counting takes place when the voting operations are completed and, from a logical point of view, it is carried out at the level of the voting management server, even if, from an administrative point of view, it is possible that it is administered by a subject other than the one which had administered said voting management server during voting operations.

The counting takes place using the list of private keys (for decoding the ballot forms), which were previously generated during the generation of the voting "tokens" and stored in random order, and which cannot be associated in any way with the voters.

The fact that both the voted ballot forms and the list of said private decoding keys are both lists of (encrypted) strings, constructed in random order, represents further protection with respect to a hypothetical further threat: a threat that could be represented by a potential spy program (external to the electoral consultation management program) which could be configured to associate ballot forms with voter, by monitoring the order of access to the server.

The voting management server performs the counting by running a program configured to try to decrypt each ballot form using each private key; the decoding attempts continue until the program finds the right key: the one that returns a string in the correct format for voting and not a disordered sequence of *bits.*

Once each voting string is decoded, the corresponding ballot form is stored and the used private key is discarded.

The voting management server accumulates the voting results and stores the private keys not used to encrypt a ballot form: i.e., the keys that were provided to voters who requested the voting *"token",* but did not cast their vote (such situation corresponds to the case of voters who, in traditional procedures, go to the polling station but do not cast a valid vote).

Once the voting strings have been decoded, the voting management server publishes the results (for example on a voting web page). Optionally, for total transparency of the vote, it can publish in a third "Smart Contract", indicated in Figure 1 with the label "SC3", the decoded ballots, the corresponding encrypted ballots and the list of public keys (voting *"tokens*") not used to encrypt a ballot, so that every voter can verify that their vote was actually analyzed and counted.

This service is optional, because the system may not even show this information publicly, to avoid the possibility of checking, after the vote, that a voter actually voted for the option for which he had possibly been bribed or blackmailed.

However, the problem of fraud based on voter corruption is a very difficult problem to combat even in the case of traditional voting procedures.

Figure 1 summarizes in a synthetic and visual way the conceptual architecture that allows you to implement an electronic voting procedure according to the teachings of the invention. The term "conceptual architecture" is intended to indicate a schematization that represents the set of physical systems that are involved, highlighting how they interact (i.e., through the exchange of which inputs and outputs).

The illustration in Figure 1 largely repeats what has already been explained up to this point, but allows us to explicitly appreciate how the inventive principles, actually offer the essential teachings for implementing a new method of electronic voting execution.

Furthermore, the offering of a methodological vision, referred to the teachings of the invention, highlights the overall functioning of the invention in a more concise way. The use of Figure 1 facilitates the understanding of the entire voting process because it offers, in an overall vision, a graphic and visual reference of the main inventive concepts proposed.

The number 100, in Figure 1, indicates the electronic voting computer platform according to the invention as a whole; while the numbers 110, 120 and 130 indicate respectively:
- a platform that operates as a voters' management server, indicated with the number 110,
- a platform that operates as a server for the management of votes cast by voters, platform indicated with the number 120,
- a "Blockchain", indicated with the number 130.

The generic voter who intends to participate in an electoral consultation called via the electronic voting computer platform 100 is indicated in Figure 1 with the number 200.

It is useful to imagine how a voter would participate in an electoral consultation if it were held in a traditional manner, and then highlight how all the voting phases that are typical of a traditional voting process can be surrogate in an IT environment using the voting platform 100 according to the invention.

In the following sequence of phases, indicated with the letters from "a)" to "g)", all the operations that take place in the context of a traditional vote, which we assume to be a reliable vote, are exhaustively described. After each single traditional phase, a sub-list of operational phases is reported as implemented electronically for the purpose of expressing an equivalent electronic vote, making use of the voting platform 100 according to the invention.
a) Firstly, in the traditional voting procedure, the voter 200 shows up at the polling station.
   ➢ This operation corresponds to the fact that the voter 200 accesses said voters' management server 110 via his own personal terminal, being said access represented in Figure 1 with the trait of dotted arrow indicated with the number 201;
   ➢ this operation is not critical, in fact, even in a traditional electoral consultation, voters go to the polls publicly.
b) In the traditional voting procedure, once arriving at the polling station, the voter 200 turns to an operator assigned for the purpose, where he communicates his identity, thus implicitly expressing his intention to vote, and allowing the operator to search for his name in the list of eligible voters, and also to verify that voter 200 has not already come to vote.
   ➢ This operation is possible because said voters' management server 110 allows the voter 200 to express his intention to vote by entering the data relating to his identity. These operations are carried out with the aid of appropriate programs executed on the voters' management server 110, and indicated in Figure 1 with the number 111.
   ➢ Furthermore, within said voters' management server 110 there are the lists of eligible voters, these lists being consultable and updatable so as to somehow also store the information that reveals whether a voter 200 has already performed an access to request to vote; these operations are also carried out with the aid of these appropriate 111 programs.
c) In the traditional voting procedure, a formal recognition of the voter 200 is also carried out, requiring him to show his own identification document, and next to his name it is noted that he has come to vote.
   ➢ This operation corresponds to the fact that the voter 200 is redirected to an IT identification service with strong authentication, indicated in Figure 1 with the number 112; this re-direction is represented in Figure 1 with the dotted arrow indicated with the number 203.
   ➢ This identification service 112 is conceptually included among the functions of said voters' management server 110, and is rendered with any known technique, among those widely used for other IT services that require secure identification of the user.
   ➢ Once the identity of the voter 200 has been ascertained (and that he has the right to vote, because he appears in the lists of those entitled to vote, and has not already come to vote), he is assigned an authentication "token", i.e., a strictly individual IT object, indicated in Figure 1 with the label "T1".
   ➢ Said authentication "token" T1, strictly individual, contains an identifier of the electoral consultation and a random string long enough to be unique and not reproducible through a "brute force" attack.
   > The proof that the identification has taken place (and therefore must never be requested again to the voter) is therefore reduced to the possession, by the voter, of an authentication "token" T1, kept in encrypted form (the process of encryption is rather complex and has been previously exposed) in a first "Smart Contract", indicated in Figure 1 with the label "SC1", suitable for being kept in the said "Blockchain" 130; the insertion of the "token" T1 within the "Smart Contract" SC1 is represented in Figure 1 with the dotted arrow indicated with the number 202.
d) In the traditional voting procedure, once the voter 200's right to vote has been established, he is given whatever he needs to vote: one or more paper voting cards and a pencil, these objects being strictly anonymous and unrecognizable.
   ➢ To operate anonymously, the voter 200 recovers his authentication "token" T1, being this operation represented in Figure 1 with the dotted arrow indicated with the number 204.
   ➢ Furthermore, the voter 200 disconnects from the voters' management server (where his identity is known, therefore potentially recoverable), an operation which in Figure 1 is represented with the dotted arrow indicated with the number 205.
   ➢ The voter 200 connects, again via his own personal device, to a second voting management server 120, an operation that, in Figure 1, is represented with the dotted arrow indicated with the number 205; this connection is anonymous and occurs by displaying the authentication "token" T1; note that the presentation of said authentication "token" T1 is made further secure through double encryption, both with a pair of keys generated by the voter and with a pair of keys from the voting management server, this guarantees that only authorized parties can transmit and receive the information exchanged.
   ➢ At the level of the voting management server 120, a check is carried out that the authentication "token" is valid, verifying its formal coherence; furthermore, it is also checked that the voter has not previously used his authentication "token" to cast a vote; these operations are carried out with the aid of appropriate programs executed on the voting management server 120, and indicated in Figure 1 with the number 121.
   ➢ At this point, said voting management server 120, again by means of said programs 121, generates a new "token", called voting "token", indicated in Figure 1 with the label "T2", which contains only the piece of information consisting on a public encryption key, to which a private key is obviously associated.
   ➢ Said voting "token" T2 is attributed to the voter 200 (whose identity the voting management server 120 does not know), this attribution is represented in Figure 1 with the dotted arrow indicated with the number 206; As usual, data exchange occurs securely through encryption performed with keys specifically generated by the parties involved in the transactions.
e) In the traditional voting procedure, at this point, the voter goes into a voting booth, i.e., a private environment where he fills out the paper ballot and where it is not possible for anyone to see the voter's vote 200.
   ➢ Possession of said voting "token" T2 is equivalent to the fact that the voter has everything needed to cast a vote.
   ➢ The vote is expressed by filling in a form made available on the voting management server; these vote compilation operations are carried out with the aid of appropriate programs executed on the voting management server 120, and indicated in Figure 1 with the number 122.
   ➢ Once the vote has been formulated, again by means of said appropriate programs 122, the vote expressed is encoded in a string, according to a specially predefined standard format.
f) In the traditional voting procedure, having cast his vote, the voter 200 folds the voting card so that the vote cannot be seen by the operator who will insert it into the ballot box.
   ➢ The string with which the expressed vote was encoded is encrypted using the key constituted by the voting "token" T2, and a vote string is then produced, indicated in Figure 1 with the number 210.
g) In the traditional voting procedure, the voter 200 exits the voting booth and hands the folded ballot paper to an operator (along with the pencil); the operator inserts this ballot into a ballot box, where it mixes randomly with other voting ballots: being this ballot box designed so as the ballot cannot be re-extracted except by opening the ballot box itself, i.e., an operation which will only take place at the end of the voting operations, to carry out the scrutiny.
   ➢ The vote string 210, encrypted with the vote "token" T2 is further encrypted with the public key of the voting management server 120, and a special program, executed at the level of the voting management server 120, inserts it in a random position of a vector of strings that correspond to the other votes cast (i.e. the votes of other voters who have already cast their vote);
   ➢ This vector of strings is inserted into a second specifically defined "Smart Contract" (which replaces the voting ballot box), associated with the vote, and which is indicated in Figure 1 with the label SC2; said insertion of this string vector within the "Smart Contract" SC2 is represented in Figure 1 with the dotted arrow indicated with the number 208.

The completion of the phases listed above marks the conclusion of the voting operations by each individual voter.

At the end of the time reserved for the electoral consultation, a certain number of voters will have made the request to cast their vote (these are the voters who have received the so-called authentication "token"), some of these will have expressed a valid vote, and the collection of votes cast, absolutely anonymous, is reliably stored within the "Smart Contract" SC2, in turn kept in a "Blockchain" 130.

The scrutiny operations can therefore take place as already explained in a previous part of this description.

Ultimately, the electronic voting platform 100 according to the invention can be considered at least as safe as the methodologies adopted in traditional consultations, because all the phases of a traditional consultation correspond to a phase of the voting operations carried out using the platform 100; and each of these phases can be rated as safe as the traditional consultation phases, if not more so.

In fact, in every step in which "something" must not be seen, this "something" is processed in an appropriately encrypted way, and in every circumstance in which "something" must not be manipulated, this "something" is stored in a "Blockchain".

### Concluding Remarks

In general, as also emerges from the previous description, the electronic voting platform, created according to the teachings of the present invention, lends itself to numerous implementation variations.

The description provided, in fact, highlights how the teachings are aimed at guaranteeing some security features that are essential for convening electoral consultations of a certain importance. The solution was made possible by using at least a pair of servers configured to manage voters and their votes separately.

As regards the management of voters, it is necessary to guarantee their secure identification, given that it must not be allowed for someone to vote using someone else's right to vote, but at the same time the secrecy of the vote must be guaranteed.

Both the identification of a voter and the confidentiality of his vote are services that can be made possible via an IT platform using known techniques.

With reference to the identification problem, the invention can be implemented according to numerous variations, using any of the identification methods with strong authentication that the prior art makes available.

These are widely tested techniques, and already widely used even in very sensitive and delicate services, such as for example services that require access to a server to arrange banking operations, or to use services towards the public administration (also accessing personal data or sensitive data).

With reference to the problem of protecting voter anonymity, however, the invention adopts another known approach, called *"Anonymous Kerberos",* which benefits from the availability of two computer servers, administered independently of each other.

As regards the management of votes, it is necessary to guarantee the impossibility of their manipulation. This result was achieved by teaching how to use, in a fairly original way, applications developed on *"Blockchain"* technologies.

The invention was initially conceived based on the *Ethereum "Blockchain",* and on *"Smart Contracts"* developed according to the standards required by this technology, however, alternative versions of the same invention can be implemented using other Ethereum-compatible *"Blockchain",* or not, given that this technology is exploited essentially for typical prerogatives that can be found in almost every *"Blockchain"* implementation.

The inventive activity was exercised to articulate a series of mechanisms which, in addition to exploiting the properties of *"Blockchain"* platforms, also make extensive use of continuous sequences of data encryption and decryption.

A non-negligible advantage of the invention consists in the fact that the processes implemented electronically, as well as the physical platforms used, allow us to identify an evident parallelism with traditional voting processes, and this fact allows us to prove, in an effective and immediate way (even at level of communication), how the proposal of the invention can boast a level of reliability, at least equivalent to that offered by traditional voting processes.

Other variations of the invention, beyond being able to implement it using different state-of-the-art technologies, may arise from the fact that the inventive principles can be applied in different application contexts.

In general, in fact, the invention lends itself to providing a platform for managing voting operations, and the related counting, in the context of a generic electoral consultation. However, if this consultation was part of a more complex and more specific decision-making process, the teachings of the invention could be integrated into more complex applications.

Therefore, in such contexts, more limited and defined, the invention could be enriched with further details, giving rise to new forms of implementation including further developments, which could be made by the expert in the field without thereby departing from the scope of the invention, as it results from this description and from the claims here attached, which constitute an integral part of the description itself.

In fact, the inventive activity, in the case of the present invention, has been lavished on offering a typology of voting platforms with some precise reliability characteristics, but the invention certainly lends itself to incorporating further features, which are not the object specific to the invention, such as for example services that can be used to counteract vote swapping or vote buying, i.e. phenomena that are very difficult to counteract, but which could be addressed by adding, for example, further services dedicated to supporting safe forms of reporting , or mechanisms for changing one's vote.

The invention is therefore susceptible to interesting evolutionary efforts, which, if not included in the present description, may be the subject of further patent applications associated with the present invention.

## Claims

1. An electronic voting computer platform (100) comprising:
i. a first voters' management server (110);
ii. a second voting management server (120);
iii. a platform in "Blockchain" technology (130),
being said first voters' management server (110) administered by a first system administrator, and configured to:
a. support the remote access of a generic voter (200) from his private terminal,
b. redirect said generic voter (200) towards an identification service (112) with strong authentication,
c. produce a first authentication "token" (T1), the production of said first authentication "token" (T1) being dependent on the outcome of the interaction of said generic voter (200) with said first voters' management server (110);
and being said first voters' management server (110) **characterized by** the fact of being configured to:
d. acquire from said generic voter (200) a public encryption key generated by said generic voter (200), which locally stores the corresponding private key,
e. acquire from said generic voter (200) the "address" on said platform in "Blockchain" technology (130) to be used to memorize said first authentication "token" (T1),
f. notify said generic voter (200) of the assignment of said first authentication "token" (T1) via said platform in "Blockchain" technology (130), by inserting said first authentication "token" (T1), encoded with the voter's public encryption key, into a first "Smart Contract" (SC1) stored on said "Blockchain" (130) using the previously communicated "address", thus limiting the transactions concerning said first "Token" (T1) to those coming from said "address" previously communicated;
and said second voting management server (120) is administered by a second system administrator, independent of said first system administrator who administers said first voters' management server (110), and is configured to:
g. support the remote access of a generic voter (200) from his private terminal,
h. acquire from said generic voter (200) a public encryption key, different from that indicated in the previous point "d.", generated by said generic voter (200), who locally stores the corresponding private key,
i. acquire from said generic voter (200) said first authentication "token" (T1) in encrypted form, and execute appropriate programs (121) aimed at verifying the authenticity of said first authentication "token" (T1);
and being said second voting management server (120) **characterized by** the fact of being configured to:
j. generate a second voting "token" (T2), which contains a public encryption key to be sent to said generic voter (200) by storing the corresponding private encryption key, in the form of a string, in a keys' vector, containing the other private keys, generated for the other voters, said vector of strings being ordered in a random order,
k. support the formulation of an electoral choice by said generic voter (200),
I. code said electoral choice by generating a ballot paper consisting of a string of characters,
m. execute the encryption of said string of characters, generating a voting string (210), suitable to be kept pending scrutiny,
n. insert said voting string (210), in random order, in a vector of strings in which a plurality of other strings corresponding to the votes expressed by the other voters are collected in random order, said vector of strings being in turn inserted into a specific second "Smart Contract" (SC2) associated with the vote in progress;
and said electronic voting computer platform (100) provides that, at the level of the voting management server (120), they are executed programs configured to carry out the counting of the votes cast, after all the votes cast in the time interval reserved for voting have been stored as indicated in the previous point "n.";
and to implement said counting, said voting management server (120) is configured to execute a program, in turn configured to
- try to decrypt each voting string (210), using each private key stored in the key vector indicated in the previous point "j.",
- that is, implementing a sequence of decoding attempts until the program finds the right key,
- that is, the key that returns a string in the correct format for voting, and not a disordered sequence of bits.

2. Electronic voting computer platform (100) according to claim 1, wherein said platform in "Blockchain" technology (130) is an Ethereum compatible "Blockchain".

3. Method for implementing an electronic voting procedure, based on an electronic voting computer platform (100) according to claim 1 or claim 2, comprising at least the following steps:
A. registration (201) of a generic voter (200), who enters his personal details by remotely accessing said first voters' management server (110) via his own private terminal;
B. execution of a check, using appropriate computer programs (111), thet the information, inserted in the previous point "A." correspond to a voter who has the right to vote and who has not previously logged in to request to vote, and if this check is successful, transition to the next phase "C" occurs;
C. re-direction (203) of said generic voter (200) to an IT identification service with strong authentication (112), identification of the same, and if this identification is successful, the transition to the subsequent phase "D" occurs;
D. generation of an authentication "token" (T1), strictly individual, containing an identifier of the voting consultation and a random string long enough to be unique, and assignment of said authentication "token" (T1) to said generic voter (200):
E. disconnection of said generic voter (200) from said first voters' management server (110), and connection (205) of said generic voter (200) to said second voting management server (120), again via a private terminal of the voter, and said connection (205) is anonymous as it occurs by displaying said authentication "token" (T1), the display of said authentication "token" (T1) being made further secure by means of double encryption, both with a pair of keys generated by the voter, and a pair of keys of the voting management server (120), which guarantees that only authorized parties can transmit and receive the information exchanged;
F. verification, through formal coherence analysis, that said authentication "token" (T1) is valid, and check that said authentication "token" (T1) has not already been used previously to express a vote, these operations being carried out with the help of appropriate programs (121) executed on said voting management server (120);
G. again by means of said appropriate programs (121), generation of a voting "token" (T2), whose only information is a public encryption key, to which a private key is associated;
H. attribution (206) of said voting "token" (T2) to said voter (200), whose identity is not known by the voting management server (120), this attribution occurs with the transmission in encrypted form of said voting "token" of (T2) voter (200);
I. expression of the vote by the voter (200), which occurs by completing a voting form made available through programs (122) appropriately configured, and executed on the voting management server (120);
J. again by means of said appropriately configured programs (122), the vote expressed is first encoded in a voting card, which consists of a string constructed according to a specially predefined standard layout;
K. subsequently, said voting card is encrypted using the key constituted by said voting "token" (T2), and a voting string (210) is thus produced;
L. said voting string (210) is further encrypted with the public key of the voting management server (120), and a special program executed at the level of the voting management server (120) inserts it in a random position of a vector of strings corresponding to the other votes cast;
and said method for implementing an electronic voting procedure is **characterized by** the fact that;
M. said assignment of said authentication "token" (T1) to said generic voter (200), indicated in the previous step "D." is carried out via said platform in "Blockchain" technology (130); in fact, this assignment occurs by following at least the steps indicated below:
I. generation, by said generic voter (200) of a private key, which he keeps, of the corresponding public key and of the "address" on the "Blockchain" (130) which must be used to exchange his own authentication "token" (T1), according to the specific algorithm of the "Blockchain" used;
II. downstream of said authentication service (112), the voter (200) is asked for his public key just generated in the previous step and the "address" on the "Blockchain" (130);
III. use of said public key to encrypt said authentication "token" (T1);
IV. storage of said authentication "token" (T1) just encrypted in a first "Smart Contract" (SC1), so that only a transaction coming from the communicated "address" can read said "token" (T1);
V. recovery, by said generic voter (200) of his encrypted authentication "token" (T1), through a transaction towards the "Blockchain" (130) coming from his "address", and corresponding decryption of the same using his own private key generated in the previous step "I.";
N. said string vector, constructed as indicated in the previous point "L.", is then inserted into a second "Smart Contract" (SC2), specifically defined, associated with the voting event, and stored into said platform in "Blockchain" technology (130).

4. Method for implementing an electronic voting counting procedure, based on an electronic voting computer platform (100) according to claim 1 or claim 2, and performed according to the voting procedure indicated in claim 3, and **characterized by** the following steps:
P. recovery of the list of private keys for decoding the voting strings (210) that had previously been generated during the generation of the voting "tokens" (T2) and storage of them, in a random order;
Q. execution of the counting of the voting strings (210) recovered from said second "Smart Contract" (SC2), by executing a program configured to try to decode each voting string (210) using each private key from the list indicated in previous point "P.", wherein the decoding attempts continue until the program finds the right key, that is the key that returns a string in the correct format for voting and not a disordered sequence of bits;
R. once each voting string (210) is decoded, the corresponding voting card is stored and counted and the private key used is discarded.
S. accumulation of votes, calculation of voting results and storage of private keys which have not been used to encrypt a ballot paper: since they are the keys that were provided to voters who requested the voting token (T2), but did not cast their vote.

5. Method for implementing an electronic voting counting procedure according to claim 4 in which, once the decoding of the voting strings (210) has been completed, in a third "Smart Contract" (SC3) are published: the decoded voting cards, the corresponding encrypted voting strings (210) and the list of voting tokens (T2) not used to encrypt a voting card, so that every generic voter (200) can verify that his vote has actually been analyzed and counted.
